# DEMANDE DE BREVET EUROPEEN

(11) **EP 1 522 923 A2**
(43) Date de publication de la demande: **13.04.2005**
(21) Numéro de dépôt: 04292214.6
(22) Date de dépôt: 15.09.2004
(51) Int. Cl.: G06F 9/46

(54) **Architecture de processeur à plusieurs contextes d'exécution simultanés**

(30) Priorité: 08.10.2003 FR 0311757
(71) Demandeur: Stmicroelectronics SA, F-92120 Montrouge (FR)
(72) Inventeur: Volp, Marcus, 76137 Karlsruhe (DE)
(74) Mandataire: Verdure, Stéphane

(57) **Abrégé**

Une architecture de processeur (10) prévoit au moins deux contextes d'exécution simultanés (11,17), et des ressources matérielles comprenant au moins une unité d'exécution (12), un ordonnanceur d'instructions (16), un contrôleur d'interruptions (20), et des moyens (30,50,41,42) de gestion de mémoire (200). Un contexte privilégié déterminé (17) parmi les contextes d'exécution simultanés comprend des moyens (171) pour, dans un mode privilégié d'un système d'exploitation, commander les autres contextes (11) de processeur par lecture et/ou écriture dans des registres desdits autres contextes.

## Description

La présente invention concerne les techniques de traitement en plusieurs fils simultanés (en anglais "Simultaneous Multi-Threading", ou SMT) mises en oeuvre dans les architectures de processeur à plusieurs contextes d'exécution (processeur multi-contextes), telles que dans les coeurs de processeur à plusieurs contextes d'exécution simultanés (en anglais "Simultaneous Multi-Threaded processors", ou SMTs).

Ces dix dernières années, des recherches ont été effectuées pour améliorer la mise en parallèle des fils et l'utilisation des unités d'exécution dans un coeur de processeur. Le traitement en plusieurs fils simultanés est une technique bien connue dans le domaine des architectures à processeur unique (voir demande de brevet US 2002/0083297) ou des architectures multiprocesseurs (voir demande de brevet US 2003/0088610). Elle permet d'augmenter la vitesse de traitement d'un microprocesseur, qu'il soit à architecture superscalaire ou non (c'est-à-dire qu'il ait plusieurs ou une seule unité d'exécution). Un fil d'exécution ("thread" en anglais), est une composante d'un processus correspondant à une séquence d'opérations élémentaires. Dans un processeur à plusieurs contextes d'exécution simultanés, un fil d'exécution est exécuté dans l'un des contextes du processeur. Un contexte d'exécution désigne donc l'état de tous les registres du processeur lorsqu'il est alloué à un fil d'exécution.

Un contexte d'exécution comprend typiquement des registres non privilégiés, c'est-à-dire accessibles par les applications en mode utilisateur, et des registres privilégiés, c'est-à-dire accessibles par le système d'exploitation (ou OS, de l'anglais "Operating System) en mode privilégié seulement. Ces derniers comprennent notamment des registres de configuration, tels que le registre d'adresse de base ("Base register") de la table de traduction ("Translation Table") de l'unité de gestion de la mémoire (ou MMU, de l'anglais "Memory Management Unit").

Dans une architecture de coeur de processeur SMT classique, tous les contextes d'exécution simultanés ont les mêmes droits d'accès aux périphériques, à la mémoire, aux registres, etc. C'est pour cela qu'une telle architecture est dite symétrique dans la suite. En fait, un processus qui est exécuté dans le mode privilégié de l'un quelconque des contextes d'exécution simultanés, possède l'entier contrôle des ressources matérielles du processeur et peut donc en pratique détourner le système de son utilisation normale.

Or, il est apparu récemment un besoin pour le traitement sécurisé d'informations sensibles telles que des données d'identification bancaire d'un utilisateur (par exemple un numéro de compte bancaire ou un code de carte de crédit). Le besoin existe de pouvoir continuer à exécuter un système d'exploitation préexistant ("Legacy OS" en anglais), tel que Windows® ou Linux®, et ses programmes d'application associés, tout en pouvant les maîtriser de manière qu'ils ne remettent pas en cause l'intégrité et la sécurité du système si un pirate venait à prendre le contrôle de ces OS en exploitant leurs nombreuses failles.

Une tendance observée dans l'état de la technique consiste à favoriser une approche essentiellement matérielle pour atteindre un certain niveau de sécurité. Selon une telle approche, des moyens matériels additionnels permettent d'encapsuler et donc de protéger un domaine sécurisé à l'intérieur du processeur, en assurant matériellement la séparation entre un mode non sécurisé et un mode sécurisé. Cette approche est utilisée, pour ne mentionner qu'eux, dans la famille de processeurs d'applications multimédia Nomadik® de STMicroelectronics, dans les produits basés sur la technologie Trustzone™ de ARM, ou dans ceux basés sur la technologie NGSCB ("Next Generation Secure Computing Base") de Microsoft®.

Le but de l'invention est de proposer une alternative à l'approche matérielle précitée.

A cet effet, selon un premier aspect de l'invention, il est proposé un processeur ayant au moins deux contextes d'exécution simultanés, et des ressources matérielles avec au moins une unité d'exécution, un ordonnanceur d'instructions ("Instruction Scheduler" en anglais), un contrôleur d'interruptions ("Interruption Controller" en anglais), et des moyens de gestion de mémoire (faisant partie d'une MMU, de l'anglais "Memory Management Unit"). Selon l'invention, l'un déterminé des contextes d'exécution simultanés, appelé ci-après contexte privilégié, comprend des moyens pour, de préférence dans un mode privilégié de l'OS uniquement restreindre l'utilisation des ressources matérielles par les autres contextes d'exécution (en mode utilisateur ou en en mode privilégié), appelés ci-après contextes non privilégiés.

L'architecture du processeur selon l'invention, qui est appelée architecture asymétrique (on verra plus loin pourquoi), permet à l'OS exécuté dans le contexte privilégié, d'encapsuler tout sous-groupe de contextes non privilégiés de manière logicielle donc modifiable dynamiquement.

Cette architecture asymétrique permet notamment à un processus manipulant des informations sensibles (du point de vue sécurité) d'être exécuté dans le contexte privilégié. En variante, un tel processus peut être exécuté dans un contexte non privilégié, qui est encapsulé grâce à la commande par le contexte privilégié.

De plus, le contexte privilégié permet, de préférence dans le mode privilégié de l'OS uniquement, de restreindre l'utilisation par les autres contextes (i.e., les contextes non privilégiés) des ressources matérielles du processeur. Ceci permet de renforcer la sécurité, en empêchant qu'un contexte exécutant un code non sécurisé ("untrusted software" en anglais) puisse prendre le contrôle, ou du moins porter atteinte, ou violer l'intégrité des ressources matérielles utilisées de manière partagée entre les contextes qui exécutent des codes sécurisés ("trusted software") et des contextes qui exécutent des codes non sécurisés.

Le processeur peut être à architecture superscalaire, c'est-à-dire avoir plus d'une unité d'exécution, ou non.

Un deuxième aspect de l'invention se rapporte à un procédé de gestion d'un processeur ayant au moins deux contextes d'exécution simultanés, et des ressources matérielles comprenant au moins une unité d'exécution, un ordonnanceur d'instructions, un contrôleur d'interruptions, et des moyens de gestion de mémoire. Selon l'invention, on prévoit un contexte privilégié déterminé parmi les contextes d'exécution simultanés, pour restreindre l'utilisation des ressources matérielles par les autres contextes d'exécution, par exemple par lecture et/ou écriture dans des registres desdits autres contextes d'exécution.

Un troisième aspect de l'invention concerne un appareil électronique comprenant un processeur selon le premier aspect. Un tel appareil peut être un téléphone mobile, notamment de 3^{ème} génération, un assistant numérique personnel, ou tout autre équipement portable sans fil. Il peut aussi s'agir d'un ordinateur à usage général, d'un lecteur de carte à puce, d'un boîtier décodeur pour la télévision numérique (en anglais "Set-Top Box"), etc...

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma bloc illustrant un exemple d'architecture d'un processeur superscalaire à contexte unique selon l'art antérieur ;
- la figure 2 est un schéma bloc illustrant un exemple d'architecture d'un processeur superscalaire à plusieurs contextes selon l'art antérieur ;
- la figure 3 est un schéma bloc illustrant un exemple d'architecture d'un processeur superscalaire à plusieurs contextes selon l'invention ;
- la figure 4 est un schéma illustrant le principe de la commande des contextes non privilégiés par le contexte privilégié selon l'invention ;
- la figure 5 est un schéma illustrant le principe de la conversion d'adresse à deux niveaux selon l'invention ;
- la figure 6 est un schéma fonctionnel illustrant la réalisation de deux répertoires de pages mémoire à parcours matériel imbriqués selon l'invention ;
- la figure 7 est un schéma illustrant l'application du concept d'accès direct à la mémoire à une technique d'adressage à deux niveaux selon l'invention ;
- la figure 8 est un schéma illustrant le principe de la commande par le contexte privilégié de l'utilisation des unités d'exécution par les contextes non privilégiés selon l'invention ; et,
- la figure 9 est un schéma illustrant le principe de la commande par le contexte privilégié de la gestion des interruptions selon l'invention.

Sur les figures, les mêmes éléments portent les mêmes références. De plus, les éléments représentés ne sont décrits en référence à une figure qu'en tant qu'ils n'ont pas déjà été présentés en référence à une autre figure.

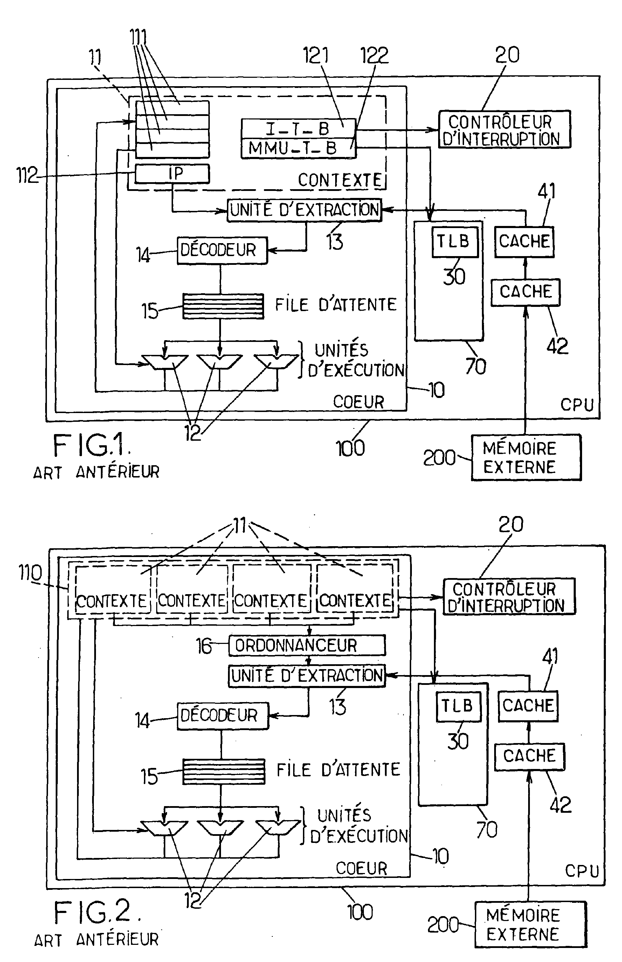

La figure 1 donne une représentation schématique (schéma bloc) d'un exemple d'architecture de processeur 100 selon l'art antérieur, et plus particulièrement d'une architecture superscalaire à contexte unique.

Le processeur 100 comprend un coeur de processeur 10 ("core" en anglais), un contrôleur d'interruptions 20, une mémoire cache de premier niveau 41 couplée à une mémoire cache de second niveau 42, et une unité de gestion de la mémoire (MMU) 70. La MMU 70 comprend un répertoire de pages mémoire 30 (ou TLB, de l'anglais "Translation Look-aside Buffer").

La MMU 70 a pour fonction, dans un processeur utilisant le concept de mémoire virtuelle à pages, d'effectuer les traductions nécessaires entre des adresses virtuelles (connues des processus exécutés dans le coeur 10) et les adresses réelles (adresses physiques), pour les accès à une mémoire externe 200 via les mémoires cache 41 et 42, et les accès aux périphériques matériels. La TLB 30 est une mémoire tampon (de taille fixe) contenant les traductions qui ont déjà été effectuées.

Le coeur de processeur 10 comprend ici un unique contexte 11. Par contexte, on entend un ensemble de registres internes définissant l'état du processeur relativement à un fil d'un processus qui s'exécute dans le coeur 10.

De plus, s'agissant dans l'exemple d'un processeur à architecture superscalaire, le coeur 10 comprend une pluralité d'unités d'exécution 12 qui sont adaptées pour effectuer le traitement des instructions en parallèle les unes avec les autres.

Le contexte 11 comprend des registres non privilégiés, c'est-à-dire accessibles par les processus en mode utilisateur, et des registres privilégiés, c'est-à-dire accessibles uniquement par l'OS en mode privilégié. Les registres non privilégiés comprennent des registres de données 111 et un registre 112 contenant un pointeur d'instruction (IP, de l'anglais "Instruction Pointer") qui désigne l'endroit où le code de l'instruction courante du contexte est stocké en mémoire. Les registres privilégiés comprennent un registre 121 contenant une information I_T_B appelée adresse de base de table d'interruptions ("Interrupt-Table-Base" en anglais), ainsi dans certains cas qu'un registre 122 contenant une information MMU_T_B appelée adresse de base de table de MMU ("MMU-Table-Base" en anglais) servant à calculer les traductions d'adresses pour accéder aux pages de la mémoire.

Le contenu du registre 121, à savoir l'information I_T_B, est fourni en entrée du contrôleur d'interruptions 20. Le contenu du registre 122, à savoir l'information MMU_T_B, est fourni en entrée de la MMU 70.

Le contenu du registre 112, à savoir le pointeur IP, est fourni en entrée d'une unité d'extraction 13 ("Fetch Unit" en anglais) qui est chargée d'extraire ("fetch" en anglais) de la mémoire externe 200 les données codant l'instruction courante, en se basant sur ledit pointeur IP.

Les données de l'instruction courante extraites par l'unité 13 sont fournies en entrée d'un décodeur d'instructions 14. Celui-ci réalise le décodage de l'instruction courante.

Les instructions décodées sont ensuite stockées dans une file d'attente 15 ("Queue" en anglais) qui obéit à une règle du type première entrée, première sortie. Les instructions sont réparties, à partir de la file d'attente 15 dans laquelle elles sont stockées sous forme décodée, entre les différentes unités d'exécution 12 en fonction de leur disponibilité. Les unités d'exécution 12 reçoivent aussi les données à traiter à partir des registres de données 111 du contexte 11. Le résultat de l'opération exécutée par chaque unité est ensuite écrit soit dans l'un de ces registres de données, soit en mémoire, soit dans un registre de périphérique matériel.

Une telle architecture est dite superscalaire en ce sens que le coeur 10 comprend plusieurs unités d'exécution susceptibles d'exécuter des instructions en parallèle. Elle est dite à contexte unique en ce sens que le coeur 10 ne comprend qu'un seul contexte.

A l'inverse, une architecture dont un exemple est donné à la figure 2 est dite à plusieurs contextes dans la mesure où le coeur 10 du processeur 100 comprend un ensemble de contextes 110, ayant une pluralité de contextes 11 dont chacun est structurellement et fonctionnellement identique au contexte 11 1 décrit ci-dessus en regard du schéma de la figure 1.

Les registres 111 de chacun des contextes 11 de l'ensemble 110 sont couplés aux unités d'exécution 12 de la même façon qu'il a été précédemment décrit. De même, le registre 121 de chaque contexte 11 est couplé au contrôleur d'interruption 20, et le registre 122 de chaque contexte 11 est couplé à la MMU 70. Par contre, le registre 112 (contenant le pointeur IP) de chaque contexte 11 est couplé à l'unité d'extraction 13 via un ordonnanceur d'instructions 16. Cet ordonnanceur 16 a pour fonction de sélectionner celui des contextes 11 dont l'instruction courante est envoyée vers les unités d'exécution 12.

Une telle architecture est dite symétrique en ce sens que chacun des contextes 11 de l'ensemble 110 possède les mêmes prérogatives que les autres. Il en résulte que chaque contexte en mode privilégié possède le contrôle sur toutes les ressources du système et donc sur les autres contextes même dans leur mode privilégié. Ceci est un inconvénient dans les applications où certains au moins des contextes sont prévus pour faire partie d'un domaine sécurisé. En effet, si un OS est piraté alors c'est tout le système qui passe sous le contrôle de cet OS pirate. La conséquence est que des informations sensibles traitées dans le contexte d'un domaine sécurisé (par exemple des données d'identification bancaire d'un utilisateur) deviennent accessibles par l'OS pirate et ses applications.

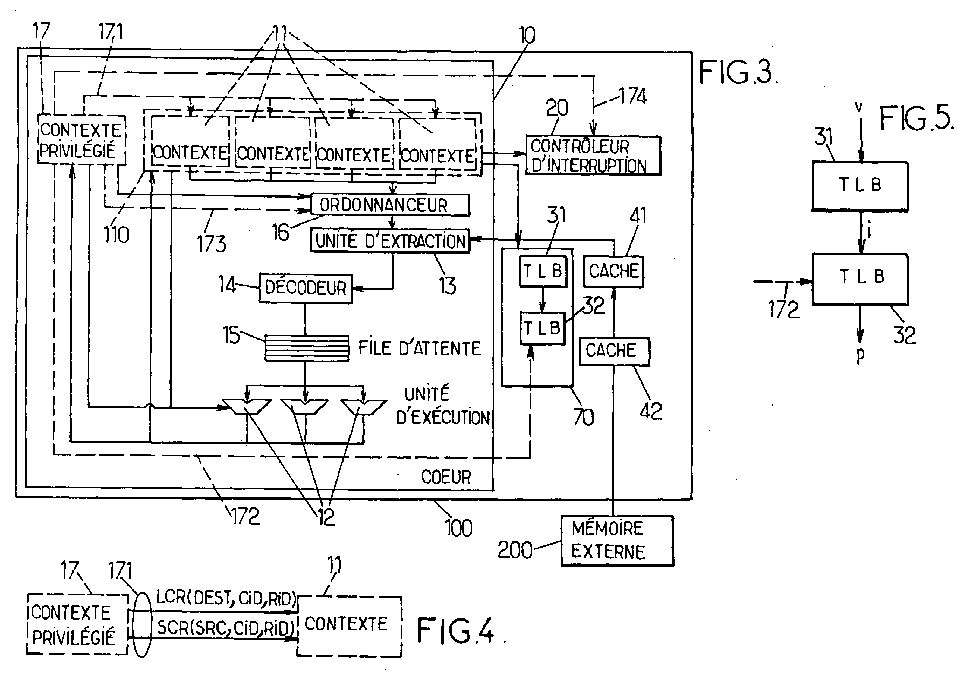

C'est pourquoi l'invention propose une autre architecture de processeur à plusieurs contextes, dont un exemple est illustré par le schéma bloc de la figure 3.

Les contextes d'exécution simultanés comprennent ici un contexte particulier 17, qui permet, de préférence dans le mode privilégié de l'OS, de restreindre l'utilisation des ressources matérielles du processeur par les autres contextes. Par convention, ce contexte particulier 17 est appelé contexte privilégié, et les autres contextes d'exécution sont appelés contextes non privilégiés. Par analogie avec l'architecture montrée à la figure 2, on considère ici que les contextes non privilégiés sont les contextes 11 de l'ensemble 110 et que le contexte privilégié 17 est un contexte supplémentaire.

Selon un mode de réalisation, le contexte privilégié 17 peut commander les contextes non privilégiés par lecture et/ou par écriture dans des registres de ces derniers, ce qui est symbolisé à la figure 3 par la flèche en trait discontinu 171.

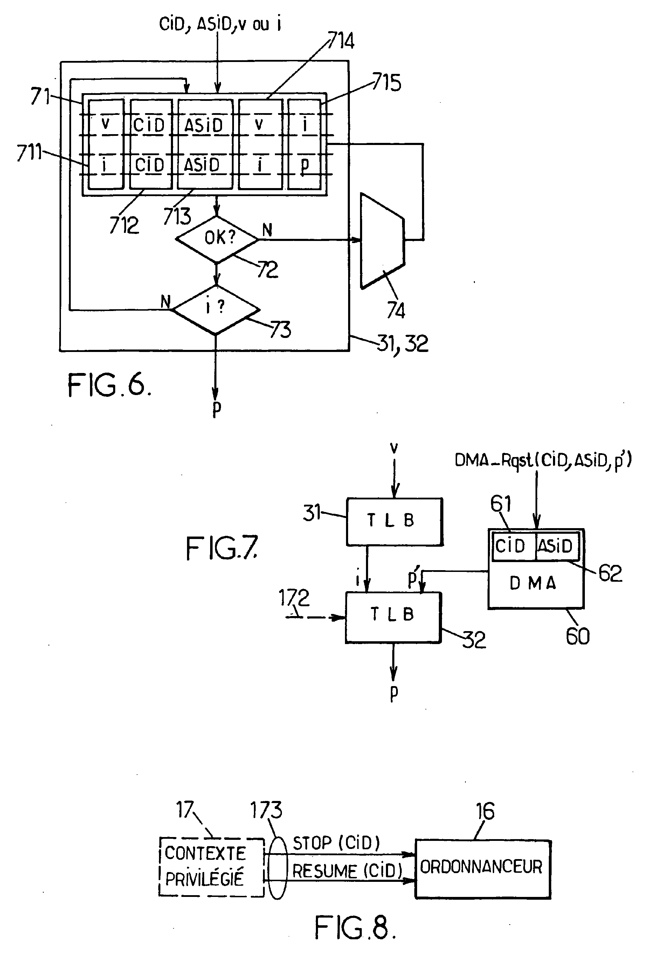

Cette commande peut être réalisée en pratique par deux instructions LCR ("Load Context Register") et SCR ("Store Context Register"), ainsi qu'il est illustré par le schéma de la figure 4.

Les deux commandes LCR et SCR sont émises par le contexte privilégié 17, et ont en paramètre un identificateur de contexte CID (de l'anglais "Context Identifier"), ainsi que un (ou plusieurs) identificateur(s) de registre (de l'anglais "Register Identifier").

L'instruction LCR (DEST,CID,RID) permet par exemple au contexte 17 de lire le contenu du registre 11 identifié par l'identificateur RID dans le contexte identifié par l'identificateur CID et de l'écrire dans un registre ou une zone mémoire identifié par le paramètre DEST. De même, l'instruction SCR (SRC,CID,RID) permet au registre 17 d'écrire dans le registre 11 identifié par l'identificateur RID du contexte identifié par l'identificateur CID, la valeur spécifiée par le paramètre SRC qui peut désigner un registre ou une zone mémoire. D'autres paramètres sont envisageables, selon les besoins de l'application.

Ces commandes permettent au contexte privilégié 17 de restreindre l'accès par les contextes non privilégiés aux ressources matérielles lorsqu'ils exécutent un processus donné. On peut ainsi encapsuler certains contextes, former des sous-groupes de contextes, qui peuvent être respectivement réservés au traitement de processus déterminés, par exemple les processus de tel ou tel OS supporté par le processeur. Dit autrement, on peut obtenir un multiplexage de processus voire un multiplexage de plusieurs OS entre un ou plusieurs contextes d'exécution, sous la commande du contexte privilégié 17.

Afin de renforcer la sécurité dans le processeur, l'architecture asymétrique selon l'invention permet d'aller plus loin, en prévoyant la commande par le contexte privilégié 17 des ressources matérielles du processeur utilisées par les contextes non privilégiés 11. Les ressources matérielles concernées sont en particulier la mémoire physique, l'ordonnanceur d'instructions et le contrôleur d'interruptions. Les différents aspects de l'invention vont maintenant être décrits successivement.

### Mémoire physique 200

Dans la mémoire physique, un espace mémoire de taille variable est alloué dynamiquement à chaque programme d'application. Plus spécifiquement, chaque programme d'application n'a accès qu'à une partie des pages de la mémoire physique. Ces pages forment un espace mémoire (éventuellement discontinu) qui est adressé au niveau du bus mémoire par des adresses physiques, mais qui est connu du programme d'application via un espace d'adressage (en général continu), dit espace d'adressage virtuel auquel le programme accède avec des adresses virtuelles. L'espace d'adressage virtuel est propre au programme d'application. La relation qui lie les adresses virtuelles dans ledit espace d'adressage et les adresses physiques dans la mémoire physique est stockée sous la forme d'une table de traductions, dans une TLB. On rappelle qu'une TLB est essentiellement une zone mémoire (i.e., table) tampon qui stocke les dernières traduction d'adresses calculées par l'unité de rechargement de table de la MMU.

De façon connue, chaque entrée ("Entry" en anglais) de la TLB, i.e., chaque ligne correspondant à une traduction dans la TLB comprend un identificateur d'espace d'adressage (ou ASID, de l'anglais "Adress Space IDentifier") afin de distinguer des adresses virtuelles identiques dans des espaces d'adressage différents. Chaque ASID est respectivement associé, de manière univoque, à un espace d'adressage déterminé du système.

Le code d'un OS, tel que Windows® ou Linux®, est conçu de manière à avoir l'entier contrôle de la machine sur laquelle il s'exécute, et en particulier sur les éléments matériels ("hardware") de la MMU et donc de la TLB.

Les TLBs connues sont de deux types distincts, qui diffèrent par leur mode de parcours des tables de pages lorsque la traduction demandée ne correspond à aucune entrée (i.e., ligne) dans la TLB, c'est-à-dire qu'elle n'est pas disponible dans cette mémoire tampon (on parle alors de "TLB miss").

Il existe d'un côté les TLBs à parcours matériel ("hardware-walked TLBs"), qui comprennent une unité logique (unité matérielle) pour assurer le parcours des tables de pages mémoire matériellement. Une erreur n'est signalée à l'OS que si la traduction demandée n'est pas valide. Pour les TLBs à parcours matériel, l'adresse de la table de pages où commence le parcours est déterminée par l'information MMU_T_B contenue dans le registre 122 de chaque contexte, qui est un registre privilégié.

Il existe d'un autre côté les TLBs à parcours logiciel ("software-walked TLBs"), qui signalent cette absence à l'OS via une exception appropriée. L'OS parcourt alors l'ensemble des tables de pages mémoire pour trouver la traduction demandée, puis l'ajoute en tant qu'entrée supplémentaire dans la TLB. Pour les TLBs à parcours logiciel, le registre 122 est inutile car le point de départ du parcours des tables de pages est stocké dans les structures de données de l'OS.

Dans les architectures classiques, le mode privilégié de chaque contexte a accès à toutes les adresses physiques. Il n'y a donc aucune isolation entre les contextes. Pour protéger les données stockées dans la mémoire physique, le contexte privilégié est adapté pour restreindre l'accès par les contextes non privilégiés à certaines zones de la mémoire physique, en commandant la MMU. On va décrire maintenant un mode de mise en oeuvre de cette commande, qui repose sur une technique de traduction d'adresse originale.

Notons tout d'abord que, dans un mode de mise en oeuvre, chaque entrée dans la TLB est étiquetée ("tagged" en anglais) par un identificateur de contexte (ou CID, de l'anglais "Context IDentifier"). Un CID permet d'identifier de manière univoque le contexte d'où provient l'instruction courante, c'est-à-dire l'instruction en cours de traitement par l'unité d'extraction 13. Le CID courant est stocké dans un registre mis à jour matériellement, par exemple par l'ordonnanceur. Pour permettre l'accès à la mémoire, la traduction d'adresse demandée doit concerner une adresse dans la mémoire physique à laquelle le contexte non privilégié d'où provient l'instruction courante (déterminé par le CID associé) est autorisé à accéder. Dit autrement, la traduction d'adresse demandée doit être une entrée de la TLB étiquetée par le CID associé au contexte non privilégié d'où provient l'instruction courante, afin que la traduction demandée soit effectuée et donc que l'accès à la mémoire soit autorisé.

Pour les TLBs à parcours logiciel, pour lesquelles la zone mémoire contenant les traductions d'adresse est accessible par logiciel, on peut prévoir en outre que les entrées qui sont étiquetées avec un autre CID que celui associé au contexte non privilégié d'où provient l'instruction courante, sont accessibles en écriture seulement. Dit autrement, en cas de discordance entre l'étiquette d'une entrée correspondant à la traduction demandée et le CID du contexte non privilégié d'où provient la traduction demandée, les données de l'entrée concernée peuvent être écrasées par l'écriture de données correspond à une traduction ajoutée, mais ne peuvent pas être lues car elles appartiennent à un autre contexte. Ainsi, l'adresse physique et les droits d'accès associés à une adresse virtuelle ne sont pas modifiables par un autre contexte que celui qui a écrit l'entrée originellement. Ceci garantit l'absence de fuites de données sensibles entre les contextes.

Pour les TLBs parcourues par matériel, rien de tel n'est prévu car les entrées de la TLB ne sont directement manipulables par le logiciel, mais rechargées par le matériel qui effectue, ainsi qu'il a été dit plus haut, le parcours des tables de pages mémoire à partir d'une base propre à chaque contexte, à savoir l'information MMU_T_B stockée dans le registre 122 des contextes non privilégiés.

Pour assurer la protection de la mémoire, l'invention propose la mise en oeuvre d'une technique de traduction d'adresse à deux niveaux, qui utilise deux TLBs effectuant chacune une traduction d'adresse. Cette technique est illustrée par le schéma de la figure 5.

Une première TLB ou TLB supérieure 31 reçoit une adresse virtuelle v de l'un quelconque des contextes non privilégiés 11 en entrée, et délivre une adresse intermédiaire i en sortie, laquelle correspond à la traduction de l'adresse v stockée dans la TLB supérieure 30. Fonctionnellement, la TLB supérieure 31 est utilisée comme une TLB conventionnelle dans les architectures connues. Dit autrement, du point de vue des contextes non privilégiés 11, tout se passe comme s'il n'y avait qu'une seule TLB, et comme si l'adresse intermédiaire i pointait directement sur une page de la mémoire physique 200.

Néanmoins, la MMU comprend une seconde TLB ou TLB inférieure 32, qui effectue une seconde traduction d'adresse. Plus spécifiquement, la TLB inférieure 32 reçoit l'adresse intermédiaire i en entrée et délivre une adresse physique p en sortie, laquelle pointe réellement sur une page mémoire de la mémoire physique 200.

La TLB supérieure 31 et/ou la TLB inférieure 32 peuvent être des TLBs à parcours logiciel. En variante, l'une et/ou l'autre peuvent être des TLBs à parcours matériel.

Dans tous les cas, certains éléments peuvent être communs aux deux TLB 31 et 32, ainsi qu'il va maintenant être exposé en regard du schéma de la figure 6, qui illustre schématiquement un mode de réalisation possible des deux TLBs sous la forme de deux TLBs à parcours matériel imbriquées.

En particulier, la mémoire tampon 71 proprement dite peut être commune aux deux TLBs si on ajoute à chaque entrée de la table une étiquette qui indique si l'adresse de départ est virtuelle (v) ou intermédiaire (i). Par exemple, la table contient une colonne supplémentaire 711 contenant ladite étiquette, en plus de la colonne 712 contenant le CID, de la colonne 713 contenant l'ASID, de la colonne 714 contenant l'adresse de départ v ou i et de la colonne 715 contenant l'adresse résultat de la traduction respectivement i ou p.

De même, une unité logique mémoire 72 qui décide si la conversion demandée a été trouvée dans la tampon 71 ("TLB match") ou non ("TLB miss"), peut être commune aux deux TLBs 31 et 32.

Pour le traitement des "TLB miss", une unité matérielle de parcours des tables de pages mémoire 74 peut aussi être commune aux TLBs 31 et 32. Bien entendu, si l'une et une seule des TLBs 31 et 32 est une TLB à parcours logiciel, l'unité 74 est propre à l'autre TLB, qui est à parcours matériel par hypothèse. De plus, si les deux TLBs 30 et 50 sont à parcours logiciel, il n'y a pas d'unité matérielle telle que l'unité 74, ni dans l'une ni dans l'autre des TLBs.

Enfin, dans le cas uniquement où les deux TLBs 31 et 32 sont à parcours matériel, une unité logique 73 décide, en cas de "TLB match", si l'adresse de départ était une adresse intermédiaire. Si non, alors c'est que la traduction était une traduction de premier niveau (adresse virtuelle v vers une adresse intermédiaire i) et une traduction de second niveau (adresse intermédiaire i vers adresse physique p) est alors demandée avec comme adresse l'adresse fournie en entrée (adresse intermédiaire i) délivrée en sortie de ladite traduction de premier niveau. Si oui, alors cela signifie que la traduction demandée était une traduction de second niveau, et son résultat (adresse physique p) est délivré en sortie.

Selon un aspect de l'invention, les modifications dans la TLB inférieure 32 sont permises uniquement sous la commande du contexte privilégié 17. Dit autrement, le contexte privilégié 17 est adapté pour configurer de manière exclusive la TLB inférieure 32. De cette façon, l'accès à la mémoire des contextes non privilégiés est restreint par le contexte privilégié 17. Cette commande est illustrée à la figure 3 par la flèche en trait discontinu 172.

Dans le cadre des processeurs utilisant le concept d'accès direct à la mémoire (ou DMA de l'anglais "Direct Memory Access"), on pourrait craindre que la protection de la mémoire fournie par la technique de traduction d'adresse à deux niveaux décrite ci-dessus soit court-circuitée par une attaque utilisant une requête DMA, un contrôleur de DMA utilisant directement les adresses physiques.

C'est pourquoi il est proposé d'agencer l'implémentation de la fonction de contrôleur de DMA (en anglais "DMA controller") entre l'implémentation des fonctions de la TLB de premier niveau supérieure 31 et de la TLB inférieure 32. Cette implantation fonctionnelle est illustrée par le schéma de la figure 7. En pratique, bien entendu, les choses sont un peu plus compliquées, mais l'Homme du métier saura appliquer l'enseignement de l'invention en tenant compte des contingences liées à la mise en oeuvre matérielle et/ou logicielle de ces fonctions.

Ainsi, une requête DMA_Rqst délivrée au contrôleur de DMA 60 fait l'objet d'une traduction d'adresse par la TLB inférieure 32. On notera que, à cet effet, une telle requête DMA_Rqst contiendra l'identificateur de contexte CID en paramètre, en plus de l'identificateur de l'espace mémoire virtuel ASID et de l'adresse p' concernée par la requête. Le contrôleur de DMA 60 comprend donc un registre 61 pour stocker l'identificateur CID, et un registre 62 pour stocker l'identificateur ASID.

Du point de vue du processus qui est à l'origine de la requête DMA, l'adresse p' qu'il fournit en croyant être une adresse physique est donc traitée par la TLB inférieure 32 en tant qu'adresse intermédiaire. Ceci reste totalement transparent pour ledit processus. Il en résulte néanmoins le maintien de la protection de la mémoire pour un processus utilisant la technologie DMA.

### Ordonnanceur d'instructions 17

L'ordonnanceur d'instructions 16 a pour fonction de sélectionner des instructions appartenant à l'un des flux d'instructions des contextes non privilégiés 11 et du contexte privilégié 17, et de les envoyer vers les unités d'exécution 12 via le décodeur 14 et la file d'attente 15. A cet effet, il met en oeuvre un algorithme d'ordonnancement approprié. On connaît plusieurs types d'algorithmes d'ordonnancement dans l'état de la technique, par exemple des algorithmes de type « Round Robin », des algorithmes d'entrelacement de blocs, des algorithmes d'ordonnancement basés sur un niveau de priorité, etc...

Afin d'assurer une restriction de l'utilisation des unités d'exécution 12 du processeur 10 par les contextes non privilégiés 11, le contexte privilégié 17 est adapté pour influencer, au moins dans une certaine mesure, le déroulement de l'algorithme d'ordonnancement. Ceci est représenté symboliquement par la flèche en trait discontinu 173 à la figure 3. Bien entendu, la manière dont cette influence se traduit en pratique dépend largement du type d'algorithme d'ordonnancement concerné.

Dans un mode de mise en oeuvre proposé ici, le contexte privilégié 17 est doté de moyens pour faire interrompre et de moyens pour faire reprendre l'exécution de certains au moins des contextes non privilégiés 11, individuellement, en commandant l'ordonnanceur d'instructions 16.

Ainsi qu'il est illustré schématiquement à la figure 8, de tels moyens peuvent être mis en oeuvre sous la forme, respectivement d'une instruction d'arrêt STOP et d'une instruction de redémarrage RESUME, émises par le contexte privilégié 17 vers l'ordonnanceur d'instructions 16. Ces instructions ont un identificateur de contexte CID en paramètre.

Dans le cas d'un processeur n'ayant qu'un contexte non privilégié 11, l'ordonnanceur d'instructions 16 peut se réduire à une unité logique qui, à la demande, commute entre le flux d'instructions provenant dudit contexte non privilégié 11 et le flux d'instructions provenant du contexte privilégié 17.

On peut aussi prévoir un moyen permettant à l'OS d'interrompre volontairement l'exécution d'un processus dans un contexte non privilégié 11 et de demander le basculement du processus vers le contexte privilégié 17 d'une manière sécurisée.

Un tel moyen peut être implémenté sous la forme d'une requête d'interruption adaptée, qui est ajoutée au jeu d'instructions du processeur. Avec un tel mécanisme, une communication entre les contextes peut être mise en oeuvre. On notera que cette requête d'interruption est fonctionnellement comparable à une instruction d'entrée en mode sécurisé dans une architecture à sécurité améliorée.

### Contrôleur d'interruptions 20

Le contrôleur d'interruptions 20 a pour fonction de démultiplexer les requêtes d'interruption provenant de différentes sources, et de les délivrer sélectivement à un (ou plusieurs) contexte(s) du processeur pour traitement.

Dans une architecture à plusieurs contextes conventionnelle, c'est-à-dire une architecture symétrique, n'importe lequel des contextes peut être sélectionné à cet effet. Il n'est toutefois pas satisfaisant, du point de vue de la sécurité, d'appliquer cette politique dans une architecture à plusieurs contextes asymétrique selon l'invention.

En effet, grâce à cette architecture, un sous-ensemble de contextes non privilégiés 11 du processeur parmi ceux de l'ensemble 110, peut être regroupés et encapsulés par l'OS s'exécutant dans le contexte privilégié 17 (voir plus haut). Il s'ensuit que le fait de délivrer une requête d'interruption à d'autres contextes non privilégiés pourrait entraîner la fuite d'informations sensibles dudit sous-ensemble de contextes non privilégiés vers les autres contextes non privilégiés. Au moins, cela peut permettre des attaques par refus de service.

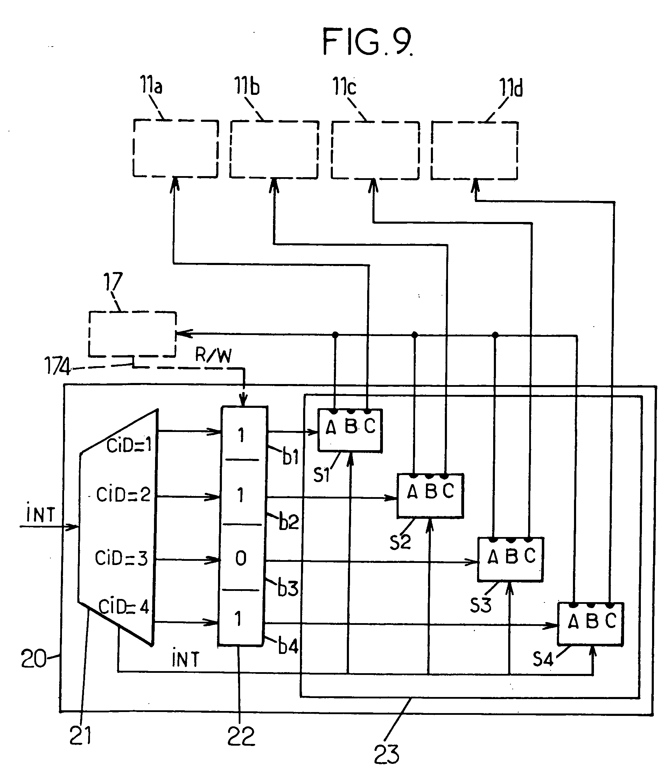

Afin de pallier ces inconvénients, il est proposé de modifier légèrement le contrôleur d'interruptions 20. Cet aspect de l'invention va maintenant être décrit en regard du schéma de la figure 9.

La figure 9 montre un exemple de réalisation du contrôleur d'interruptions 20 dans un cas particulier où le processeur comprend quatre contextes non privilégiés, respectivement référencés 11a, 11b, 11c et 11d. Cet exemple se généralise aisément à d'autres cas, où le processeur comprend un nombre quelconque de contextes non privilégiés.

Le contrôleur 20 comprend, pour chaque requête d'interruption, un registre 22 avec des bits b1, b2, b3 et b4 respectivement associé à chacun des contextes non-privilégés 11a, 11b, 11c et 11d du processeur. Par exemple, si un bit d'un registre 22 a la valeur 1, cela signifie que la requête d'interruption INT correspondant à ce registre, peut être délivrée au contexte non privilégié associé à ce bit. A l'inverse, la valeur 0 d'un bit du registre 22 entraîne la délivrance de la requête d'interruption INT au contexte privilégié 17 au lieu du contexte non privilégié associé à ce bit, en sorte qu'elle est traitée par ledit contexte privilégié. Dit autrement, la valeur binaire du bit commande la délivrance (pour traitement) ou non de l'interruption INT au contexte non privilégié associé.

Dans un exemple de réalisation, le contrôleur 20 comprend une unité de démultiplexage 21 qui met en oeuvre la fonction de démultiplexage habituelle du contrôleur 20, d'une manière connue en soi. Au lieu de délivrer directement l'interruption à l'un (ou plusieurs) des contextes 11a à 11d sélectionné(s) pour traiter l'interruption, l'unité de démultiplexage 21 active le registre 22 correspondant à la requête d'interruption INT, en sorte que la valeur du bit de ce registre qui est associé audit (auxdits) contexte(s) sélectionné(s) est délivrée à une unité logique de décodage 23.

Dans un exemple de réalisation conforme à la figure 9, l'unité 23 comprend des interrupteurs à trois positions référencés S1, S2, S3 et S4, qui sont associés aux bits du registre 22 respectivement b1, b2, b3 et b4 d'une part, et aux contextes non privilégiés 11a, 11b, 11c et 11d du processeur d'autre part. Chaque interrupteur reçoit en entrée l'interruption INT, qui lui est fournie par l'unité de démultiplexage 21. Par exemple, ces interrupteurs sont réalisés à l'aide de portes logiques à trois états. Dans un état désactivé (par exemple état haute impédance), représenté à la figure par la lettre B, les interrupteurs ne transmettent aucune donnée. Dans un premier état activé, représenté à la figure par la lettre A, dans lequel ils sont placés lorsque le bit associé du registre 22 a la valeur 1, les interrupteurs autorisent la transmission de l'instruction d'interruption INT au contexte non privilégié associé. Dans un second état activé, représenté à la figure par la lettre C, dans lequel ils sont placés lorsque le bit associé du registre 22 activé par l'unité 21 a la valeur 0, les interrupteurs empêchent la transmission de l'interruption INT au contexte non privilégié et forcent sa transmission au contexte privilégié 17 du processeur.

Ainsi, dans l'exemple représenté à la figure 9 pour lequel les bits b1, b2, b3 et b4 du registre ont respectivement les valeurs 1, 1, 0 et 1, les contextes non privilégiés 11a, 11b et 11d sont autorisés à traiter l'interruption INT s'ils sont sélectionnés par l'unité de démultiplexage 21 du contrôleur d'interruptions 20, mais pas le contexte non privilégié 11c.

Le contenu des registres 22 correspondant respectivement à chaque requête d'interruption, c'est-à-dire la valeur des bits b1, b2, b3, et b4 qu'il stocke, est accessible en lecture et en écriture par le contexte non privilégié 17 seulement. Ceci est symbolisé, à la figure 3 par la flèche en trait discontinu 174 reliant ces deux entités. Ainsi, le registre 22 permet au contexte privilégié 17 d'empêcher sélectivement la délivrance de requête d'interruption à certains contextes non privilégiés du processeur 10, avec ici pour conséquence qu'il traitera lui-même ces interruptions. De cette manière, l'isolation entre les contextes non privilégiés est assurée même en ce qui concerne le traitement des interruptions.

On notera que d'autres politiques peuvent être appliquées pour le traitement des interruptions en cas de non-autorisation de certains des contextes non privilégiés, par exemple en prévoyant la sélection par l'unité 21 d'un contexte non privilégié autorisé seulement.

La solution proposée ici a toutefois l'avantage de la simplicité car, avec peu d'éléments logiques supplémentaires, elle évite de modifier la réalisation de l'unité de multiplexage 21 par rapport aux architectures de processeur connues.

On notera pour finir que, si l'architecture multi-contextes asymétrique d'un processeur selon l'invention a été décrite ci-dessus dans le cadre d'une application visant à améliorer la sécurité pour l'exécution de programmes d'application traitant des informations sensibles, cette architecture trouve également d'autres applications.

Par exemple, elle peut être utilisée pour la réalisation de machines virtuelles supportées par les éléments matériels ("hardware") d'un processeur. En effet, chaque contexte non privilégié est assimilable à un agencement de la totalité des ressources matérielles du processeur, exactement comme une machine virtuelle. En fait, le processeur exécute directement un tel contexte. Il s'ensuit que le contexte privilégié selon l'invention, qui contrôle tous les contextes non privilégiés, peut être vu comme un moniteur de machines virtuelles dans le processeur. Les instructions LCR et SCR présentées plus haut permettent en outre de saisir l'état instantané de la machine virtuelle exécutée dans un contexte non privilégié déterminé, ce qui permet en particulier le multiplexage de contextes non privilégiés entre plusieurs machines virtuelles. Grâce à l'invention, le concept de virtualisation de machines dans un processeur peut donc être mis en oeuvre dans un processeur moyennant peu de moyens matériels supplémentaires.

Un autre exemple d'application est l'utilisation d'un OS « à tout faire » ("Workhorse OS", en anglais) non modifié, pour les systèmes basés sur un micro-noyau ("micro-Kernel", en anglais). En effet, des machines à architecture multi-contextes asymétrique selon l'invention peuvent être utilisées de manière qu'un OS préexistant non modifié soit exécuté dans un contexte non privilégié tout en étant entièrement contrôlé par un micro-noyau exécuté dans le contexte privilégié.

## Revendications

1. Processeur (10) ayant au moins deux contextes d'exécution simultanés (11,17), et des ressources matérielles comprenant au moins une unité d'exécution (12), un ordonnanceur d'instructions (16), un contrôleur d'interruptions (20), et des moyens (30,50,41,42) de gestion de mémoire (200), dans lequel un contexte privilégié déterminé (17) parmi les contextes d'exécution simultanés comprend des moyens (171,172,173,174) pour restreindre l'utilisation de certaines au moins des ressources matérielles par les autres contextes d'exécution (11).

2. Processeur selon la revendication 1, dans lequel le contexte privilégié comprend des moyens (171) pour lire et/ou écrire dans des registres des autres contextes d'exécution.

3. Processeur selon la revendication 1 ou la revendication 2, dans lequel les moyens de gestion de la mémoire comprennent des moyens de traduction d'adresse à deux niveaux, ayant un répertoire de tables de pages mémoire supérieur (31) pour la traduction d'une adresse virtuelle (v) fournie en entrée en une adresse intermédiaire (i) délivrée en sortie, et un répertoire de tables de pages mémoire inférieur (32) pour la traduction d'une adresse intermédiaire fournie en entrée en une adresse physique (p) délivrée en sortie, et dans lequel le contexte privilégié comprend des moyens (172) pour, dans un mode privilégié du système d'exploitation, configurer de manière exclusive ledit répertoire de tables de pages mémoire inférieur.

4. Processeur selon la revendication 3, dans lequel le répertoire de tables de pages mémoire supérieur et le répertoire de tables de pages mémoire inférieur ont en commun une table de traductions d'adresses (71) dans laquelle chaque entrée est étiquetée par une information (711) indiquant si l'adresse en entrée est une adresse virtuelle ou une adresse intermédiaire, et/ou une unité logique (72) décidant si une traduction demandée est disponible dans ladite table de traductions d'adresse, et/ou une unité matérielle de parcours des tables de pages mémoire.

5. Processeur selon la revendication 3 ou la revendication 4, comprenant en outre un contrôleur d'accès direct à la mémoire (60) qui est fonctionnellement agencé entre le répertoire de tables de pages mémoire supérieur et le répertoire de tables de pages mémoire inférieur.

6. Processeur selon l'une quelconque des revendications précédentes, dans lequel le contexte privilégié comprend des moyens (173) de commande de l'ordonnanceur d'instructions, avec des moyens pour faire interrompre (STOP) et/ou des moyens pour faire reprendre (RESUME) l'exécution d'un au moins desdits autres contextes d'exécution par l'unité d'exécution.

7. Processeur selon l'une quelconque des revendications précédentes dans lequel le contexte privilégié comprend des moyens (174) de commande du contrôleur d'interruptions pour empêcher la délivrance, pour traitement, d'une instruction d'interruption à l'un au moins desdits autres contextes d'exécution.

8. Processeur selon la revendication 7, dans lequel le contrôleur d'interruptions comprend, pour chaque requête d'interruption, un registre (22) ayant un bit associé à chacun desdits autres contextes d'exécution, la valeur binaire dudit bit commandant la délivrance ou non de ladite requête d'interruption audit contexte associé.

9. Processeur selon la revendication 8, dans lequel la valeur binaire dudit bit commande la délivrance sélective de ladite instruction d'interruption audit contexte associé ou au contexte privilégié.

10. Processeur selon la revendication 8 ou la revendication 9, dans lequel les moyens de commande du contrôleur d'interruptions du contexte privilégié comprennent des moyens exclusifs de lecture et/ou d'écriture dans ledit registre du contrôleur d'interruptions.

11. Procédé de gestion d'un processeur (10) ayant au moins deux contextes d'exécution simultanés (11,17), et des ressources matérielles comprenant au moins une unité d'exécution (12), un ordonnanceur d'instructions (16), un contrôleur d'interruptions (20), et des moyens (30,50,41,42) de gestion de mémoire (200), suivant lequel on prévoit un contexte privilégié déterminé (17) parmi les contextes d'exécution simultanés pour restreindre l'utilisation de certaines au moins des ressources matérielles par les autres contextes d'exécution (11).

12. Procédé selon la revendication 11, suivant lequel le contexte privilégié est en outre prévu pour lire et/ou écrire (171) dans des registres des autres contextes d'exécution.

13. Procédé selon la revendication 11 ou la revendication 12, suivant lequel la gestion de la mémoire comprend une traduction d'adresse à deux niveaux, ayant la traduction d'une adresse virtuelle (v) fournie en entrée en une adresse intermédiaire (i) délivrée en sortie d'un répertoire de tables de pages mémoire supérieur (31), et la traduction d'une adresse intermédiaire fournie en entrée en une adresse physique (p) délivrée en sortie d'un répertoire de tables de pages mémoire inférieur (32), et suivant lequel le contexte privilégié est en outre prévu pour, dans un mode privilégié du système d'exploitation, configurer (172) de manière exclusive ledit répertoire de tables de pages mémoire inférieur.

14. Procédé selon la revendication 13, suivant lequel le répertoire de tables de pages mémoire supérieur et le répertoire de tables de pages mémoire inférieur ont en commun une table de traductions d'adresse (71) dans laquelle chaque entrée est étiquetée par une information (711) indiquant si l'adresse en entrée est une adresse virtuelle ou une adresse intermédiaire, et/ou une unité logique (72) décidant si une traduction demandée est disponible dans ladite table de traductions d'adresse, et/ou une unité matérielle de parcours des tables de pages mémoire.

15. Procédé selon la revendication 13 ou la revendication 14, suivant lequel, le processeur comprenant en outre un contrôleur d'accès direct à la mémoire (60), ledit contrôleur d'accès direct à la mémoire est fonctionnellement agencé entre le répertoire de tables de pages mémoire supérieur et le répertoire de tables de pages mémoire inférieur.

16. Procédé selon l'une quelconque des revendications 12 à 15, suivant lequel le contexte privilégié est prévu en outre pour commander (173) l'ordonnanceur d'instructions, avec une instruction pour faire interrompre (STOP) et/ou une instruction pour faire reprendre (RESUME) l'exécution d'un au moins desdits autres contextes d'exécution par l'unité d'exécution.

17. Procédé selon l'une quelconque des revendications 12 à 16, suivant lequel le contexte privilégié est prévu en outre pour commander (174) le contrôleur d'interruptions afin d'empêcher la délivrance, pour traitement, d'une requête d'interruption à l'un au moins desdits autres contextes d'exécution.

18. Procédé selon la revendication 17, suivant lequel, le contrôleur d'interruptions comprenant, pour chaque requête d'interruption, un registre (22) ayant un bit associé à chacun desdits autres contextes d'exécution, la valeur binaire dudit bit commande la délivrance ou non de ladite requête d'interruption audit contexte associé.
